# EUROPEAN PATENT APPLICATION

(11) **EP 2 549 137 A2**
(43) Date of publication of application: **23.01.2013**
(21) Application number: 12176333.8
(22) Date of filing: 13.07.2012
(51) Int. Cl.: F16D 1/06, H02K 7/116

(54) **Traction motor**

(30) Priority: 20.07.2011 KR 20110071843
(71) Applicant: LG Innotek Co., Ltd., Seoul 100-714 (KR)
(72) Inventor: Park, Jaehyun, 100-714 SEOUL (KR)
(74) Representative: Novagraaf Technologies

(57) **Abstract**

Provided is a traction motor including: a hub housing of the bike; a fixing shaft centrally mounted at the hub housing; a motor mounted inside of the hub housing and coaxially arranged with the fixing shaft; a rotation shaft rotatably arranged at the center of the motor to output a turning effect of the motor; and a transmission including a sun gear connected to the rotation shaft and assembled in a separate part receiving power of the motor, a planetary gear meshed with the sun gear to transmit the power of the motor to the hub housing and a ring gear.

## Description

This application claims the benefit of earlier filing date and right of priority to Korean Patent Application No. 10-2011-0071843, filed on July 20, 2011, the contents of which is hereby incorporated by reference in their entirety.

### BACKGROUND OF THE DISCLOSURE

### Field of Endeavor

The present disclosure relates to a motor used for a traction motor.

### Background

The pedal cycle may be, for example, a conventional pedal cycle in which drive is only ever provided by a cyclist applying force to the pedals thereof, such cycles sometimes being referred to as "push bikes".

Recently, the pedal cycle has evolved to, for example, a pedelec, an EAPC (electrically-assisted pedal cycle) an electric bicycle or a traction motor. The electrically-assisted pedal cycle (EAPC) or a traction motor is operated by a motor in such a manner that electrical power is used to assist the efforts of a cyclist pedaling the cycle.

Several methods of arranging a motor have been attempted and a recent method is to embed a motor and a transmission inside a hub forming a front wheel or a rear wheel. The hub is integrally formed with the motor and the transmission therein.

The hub includes a hub housing and a stationary shaft. The motor is arranged inside the hub housing, and the stationary shaft is fixed to a front wheel or a rear wheel of a frame of a traction motor or an e-scooter. As a result, the hub housing is rotated relative to the stationary shaft to rotate a wheel of the bike coupled to the hub housing.

The motor is housed inside the hub housing to rotate a rotation shaft by means of the electromagnetic interaction. The motor housing of the motor is fixed relative to the hub housing, and the rotation shaft rotatably arranged in the center of the motor housing transmits a turning effect to a sun gear integrally formed at a distal end thereof, whereby a power is supplied to a transmission including the sun gear.

The transmission is provided with a planetary gear meshed with the sun gear, a margin of the transmission is arranged with a ring gear to mesh with the planetary gear, whereby the transmission receives the turning effect of the rotation shaft in a reduced speed.

The sun gear, as mentioned above, is integrally configured with the rotation shaft to be provided at a distal end of one side of the rotation shaft. In this configuration, there is a high probability of concentricity of each gear forming the sun gear and the transmission being twisted when a T-shaft of the transmission and the planetary gear are assembled.

If the concentricity among the gears is bent out of shape, it is problematic that gear noise is increased and life of motor and transmission can be shortened.

### SUMMARY

The present disclosure has been made to solve the foregoing problems of the prior art and therefore an object of certain embodiments of the present invention is to provide a traction motor configured to improve a motor structure whereby concentricity among the sun gear and the planetary gear is not bent out of shape.

In one general aspect of the present disclosure, there is provided a traction motor comprising: a hub housing of the bike; a fixing axis centrally mounted at the hub housing; a motor mounted inside of the hub housing and coaxially arranged with the fixing axis; a rotation shaft rotatably arranged at the center of the motor to output a turning effect of the motor; and a transmission including a sun gear connected to the rotation shaft and assembled in a separate part receiving power of the motor, a planetary gear meshed with the sun gear to transmit the power of the motor to the hub housing and a ring gear.

Preferably, but not necessarily, a shape of a surface where the rotation shaft and the sun gear face each other is complementarily configured.

Preferably, but not necessarily, a distal end of the rotation shaft is formed with a coupling lug protrusively formed in a predetermined shape, and a surface corresponding to the coupling lug of the sun gear is formed with a coupling groove having a shape corresponding to the predetermined shape of the coupling lug and having a depth corresponding to a length of the coupling lug.

Preferably, but not necessarily, a distal end of the rotation shaft is formed with a coupling lug protrusively formed in a shape of "+", and a surface corresponding to the coupling lug of the sun gear having a shape corresponding to the predetermined "+" shape of the coupling lug and having a depth corresponding to a length of the coupling lug.

Preferably, but not necessarily, a distal end of the rotation shaft is formed with a coupling lug protrusively formed in a polygonal shape, and a surface corresponding to the coupling lug of the sun gear is formed with a coupling groove having a shape corresponding to the polygonal shape of the coupling lug and having a depth corresponding to a length of the coupling lug.

The traction motor according to the present disclosure has an advantageous effect in that a rotation shaft and a sun gear are provided in a separate part to allow a consistent control of concentricity, true position and gear backlash value between the sun gear and planetary gears forming a transmission in the assembly process, whereby assembly accuracy can be improved.

Another advantage is that it is easy to inspect a gear alignment state in a transmission assembly and it is possible to assemble the motor and the transmission assembly as they are, whereby gear noise can be reduced, and gear life can be improved.

### BRIEF DESCRIPTION OF THE DRAWINGS

The drawing figures depict one or more implementations in accord with the present concepts, by way of example only, not by way of limitations. In the figures, like reference numerals refer to the same or similar elements.

The accompanying drawings, which are included to provide a further understanding of the disclosure and are incorporated in and constitute a part of this application, also illustrate embodiment(s) of the disclosure, and together with the description serve to explain the principle of the disclosure. In the drawings:
FIG. 1 is a schematic cross-sectional view illustrating a traction motor according to an exemplary embodiment of the present disclosure;
FIG. 2 is an exploded perspective view illustrating a coupled relation between a rotation shaft and a sun gear according to a first exemplary embodiment of the present disclosure;
FIG. 3 is an exploded perspective view illustrating a coupled relation between a rotation shaft and a sun gear according to a second exemplary embodiment of the present disclosure; and
FIG. 4 is an exploded perspective view illustrating a coupled relation between a rotation shaft and a sun gear according to a third exemplary embodiment of the present disclosure

### DETAILED DESCRIPTION

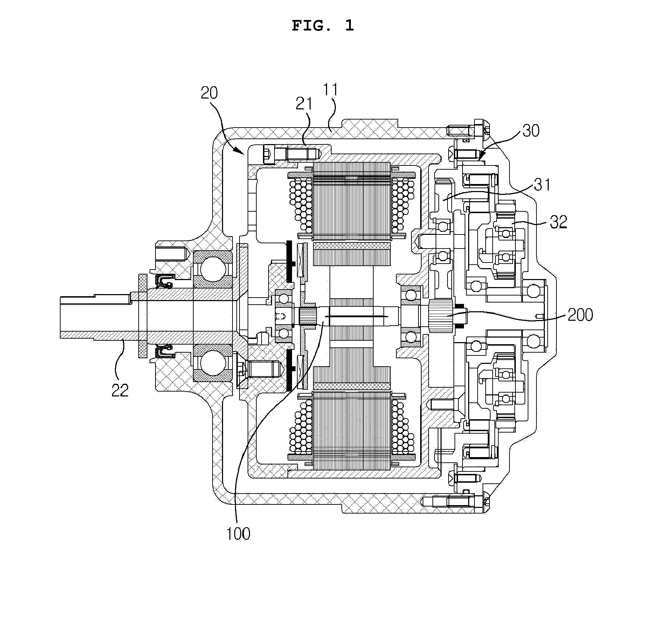

The disclosed embodiments and advantages thereof are best understood by referring to FIGS. 1-4 of the drawings, like numerals being used for like and corresponding parts of the various drawings. Other features and advantages of the disclosed embodiments will be or will become apparent to one of ordinary skill in the art upon examination of the following figures and detailed description. It is intended that all such additional features and advantages be included within the scope of the disclosed embodiments, and protected by the accompanying drawings. Further, the illustrated figures are only exemplary and not intended to assert or imply any limitation with regard to the environment, architecture, or process in which different embodiments may be implemented. Accordingly, the described aspect is intended to embrace all such alterations, modifications, and variations that fall within the scope and novel idea of the present invention.

Meanwhile, the terminology used herein is for the purpose of describing particular implementations only and is not intended to be limiting of the present disclosure. The terms "first," "second," and the like, herein do not denote any order, quantity, or importance, but rather are used to distinguish one element from another. For example, a second constituent element may be denoted as a first constituent element without departing from the scope and spirit of the present disclosure, and similarly, a first constituent element may be denoted as a second constituent element.

As used herein, the terms "a" and "an" herein do not denote a limitation of quantity, but rather denote the presence of at least one of the referenced item. That is, as used herein, the singular forms "a", "an" and "the" are intended to include the plural forms as well, unless the context clearly indicates otherwise.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present.

It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Also, "exemplary" is merely meant to mean an example, rather than the best. If is also to be appreciated that features, layers and/or elements depicted herein are illustrated with particular dimensions and/or orientations relative to one another for purposes of simplicity and ease of understanding, and that the actual dimensions and/or orientations may differ substantially from that illustrated.

That is, in the drawings, the size and relative sizes of layers, regions and/or other elements may be exaggerated or reduced for clarity. Like numbers refer to like elements throughout and explanations that duplicate one another will be omitted.

Hereinafter, a traction motor according to exemplary embodiments of the present disclosure will be described in detail with reference to the accompanying drawings.

FIG.1 is a schematic cross-sectional view illustrating a traction motor according to an exemplary embodiment of the present disclosure.

Referring to FIG.1, the traction motor (hereinafter simply referred to as bike) includes a hub housing 11, a motor 20 and a transmission 30.

The hub housing 11 takes an approximately cylindrical shape, and is arranged at a center axis of a front wheel or a rear wheel of the bike. The hub housing 11 may be arranged at a periphery with a bike wheel member, or may be coupled to a hub housing accommodation groove formed at an inner wheel of bike wheel.

Meanwhile, the hub housing 11 is centrally formed with a fixing axis 22. The fixing axis 22 is fixed at a front wheel or a rear wheel side of a frame of a traction motor or an e-scooter. Thus, the hub housing 11 is rotated relative to the fixing axis 22 to rotate the wheel of the bike coupled to the hub housing 11.

The motor 20 is concentrically mounted with the fixing axis 22 inside the hub housing 11. A brushless motor is largely used for the motor 20 comprised of a stator and a rotor. A motor housing 21 of the motor 20 is fixed at the hub housing 11, and a rotation shaft 100 centrally and rotatably arranged at the motor housing 21 outputs to the transmission 30 side a turning effect generated by interaction between the rotor and the stator mounted inside the motor housing 21.

The transmission 30 is connected to the rotation shaft 100. The transmission is a mechanical device that allows power to be sent from a power source, most often an engine or motor, to a drive mechanism by changing the power to a predetermined size of turning effect. The transmission 30 includes a sun gear 200 connected to the rotation shaft 100, a planetary gear 31 meshed with the sun gear 200, and a ring gear 32 receiving a power from the planetary gear 31.

A detailed configuration of the motor 20 and the transmission 30 is irrelevant to a subject matter of the present disclosure, and has no big difference from what is disclosed in prior art, such that the detailed configuration is omitted.

The characteristic of the present disclosure is a coupled relationship between the rotation shaft 100 and the sun gear 200, and only difference from that of prior art lies in the fact that the rotation shaft 100 and the sun gear 200 are separately configured but coupled through a complimentary coupled structure.

That is, a shape of a surface where the rotation shaft 100 and the sun gear 200 face each other is complementarily configured, and a power is transmitted through a press-fitted coupling of the rotation shaft 100 and the sun gear 200.

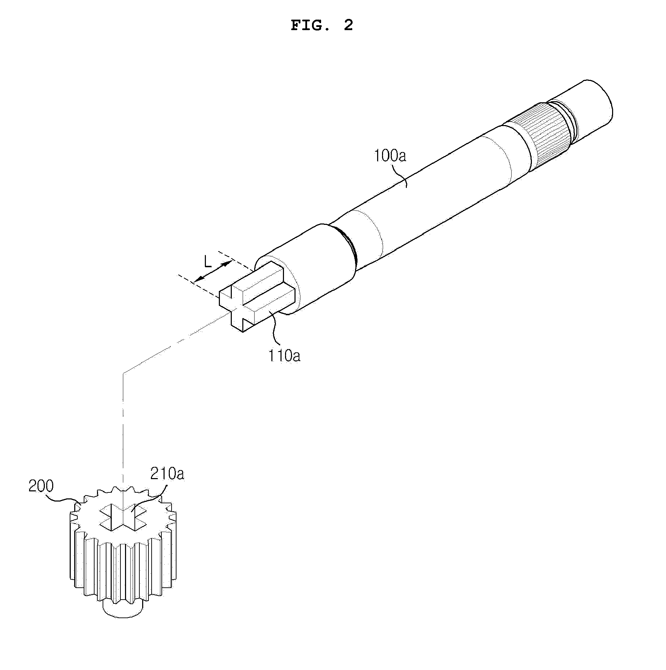

To this end, a distal end of the rotation shaft 100 is formed, as illustrated in FIGS. 2, 3 and 4, with coupling lugs 110a, 110b, 110c each protrusively formed in a predetermined shape, and a surface corresponding to the coupling lugs 110a, 110b, 110c of the sun gear 200 is preferably formed with coupling grooves 210a, 210b, 210c each having a shape corresponding to the predetermined shape of the coupling lug and having a depth corresponding to a length of the coupling lug.

FIG.2 is an exploded perspective view illustrating a coupled relation between a rotation shaft 100 and a sun gear 200 according to a first exemplary embodiment of the present disclosure.

Referring to FIG.2, a distal end of the rotation shaft 100 is preferably formed with a coupling lug 110a protrusively formed in a shape of "+", and a surface corresponding to the coupling lug 110a of the sun gear 200 is formed with a coupling groove 210a having a shape corresponding to the predetermined "+" shape of the coupling lug 110a and having a depth corresponding to a length (L) of the coupling lug 110a.

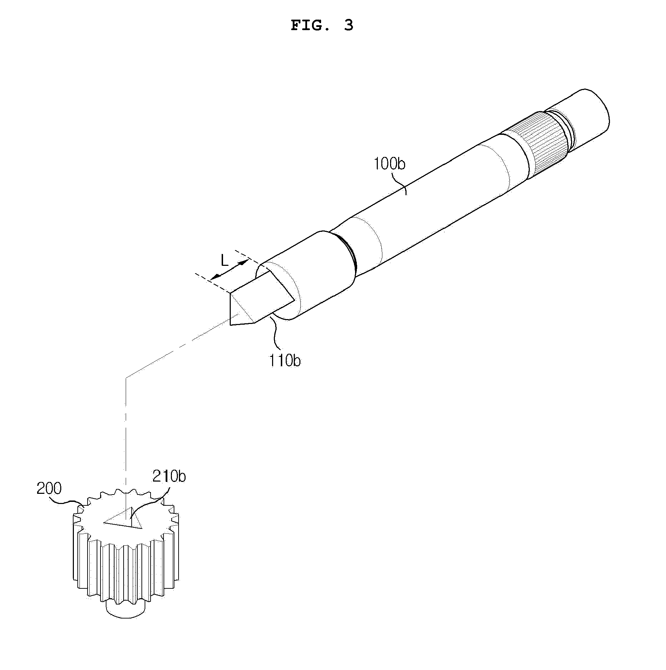

FIG. 3 is an exploded perspective view illustrating a coupled relation between a rotation shaft 100 and a sun gear 200 according to a second exemplary embodiment of the present disclosure.

Referring to FIG.3, a distal end of the rotation shaft 100 is preferably formed with a coupling lug 110b protrusively formed in a shape of " ", and a surface corresponding to the coupling lug 110b of the sun gear 200 is formed with a coupling groove 210b having a shape corresponding to the predetermined " " shape of the coupling lug 110b and having a depth corresponding to a length (L) of the coupling lug 110b.

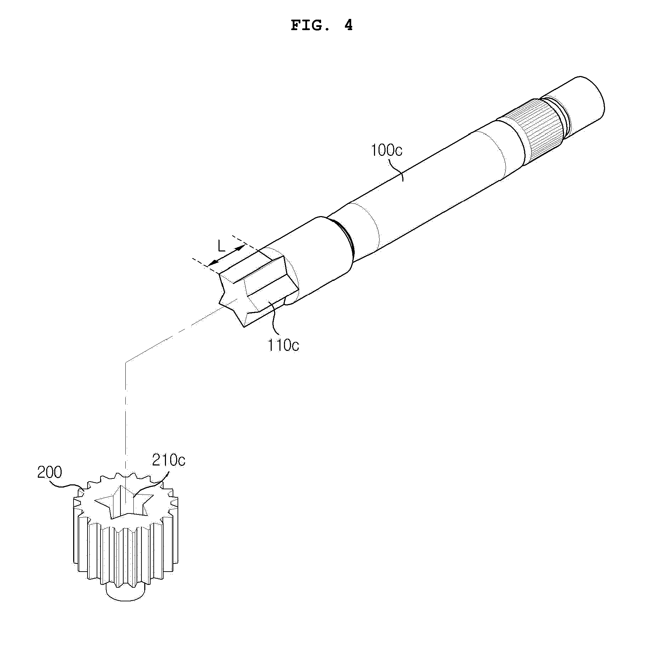

FIG.4 is an exploded perspective view illustrating a coupled relation between a rotation shaft 100 and a sun gear 200 according to a third exemplary embodiment of the present disclosure.

Referring to FIG. 4, a distal end of the rotation shaft 100 is formed with a coupling lug 110c protrusively formed in a shape of " ", and a surface corresponding to the coupling lug 110c of the sun gear 200 is formed with a coupling groove 210c having a shape corresponding to the predetermined " " shape of the coupling lug 110c and having a depth corresponding to a length (L) of the coupling lug 110c.

Meanwhile, although not illustrated in the drawings, the shapes of the coupling lug 110 are not limited to the "+", " " and " ", polygonal shapes including "□" and " " may be used as need arises, and any polygonal shapes capable of transmitting a power may be used.

As apparent from the foregoing, if the rotation shaft 100 and the sun gear 200 are configured in a separate part, each concentricity of the sun gear 200, the planetary gear 31 and the ring gear 32 that form the transmission 30 coupled to the rotation shaft 100 can be easily adjusted.

That is, in a case the rotation shaft 100 and the sun gear 200 are integrally formed as in the prior art, each concentricity of gears forming the transmission may be bent of shape in the course of meshing the sun gear to the planetary gear. However, in a case the rotation shaft 100 and the sun gear 200 are configured in a separate part, the transmission including the sun gear 200 can be assembled in a module to allow the completely assembled transmission module to be connected to the rotation shaft 100, whereby assembleability can be improved and an assembly accuracy can be also enhanced.

Thus, the traction motor according to the present disclosure has an industrial applicability in that a rotation shaft and a sun gear are provided in a separate part to allow a consistent control of concentricity, true position and gear backlash value between the sun gear and planetary gears forming a transmission in the assembly process, whereby assembly accuracy can be improved, and it is easy to inspect a gear alignment state in a transmission assembly, and it is possible to assemble the motor and the transmission assembly as they are, whereby gear noise can be reduced, and gear life can be improved.

Although the present disclosure has been described with reference to a number of illustrative embodiments thereof, it should be understood that numerous other modifications and embodiments can be devised by those skilled in the art that will fall within the spirit and scope of the principles of this disclosure.

More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A traction motor comprising:
a hub housing of the bike;
a fixing shaft centrally mounted at the hub housing;
a motor mounted inside of the hub housing and coaxially arranged with the fixing shaft;
a rotation shaft rotatably arranged at the center of the motor to output a turning effect of the motor; and
a transmission including a sun gear connected to the rotation shaft and assembled in a separate part receiving power of the motor, a planetary gear meshed with the sun gear to transmit the power of the motor to the hub housing and a ring gear.

2. The motor of claim 1, wherein a shape of a surface where the rotation shaft and the sun gear face each other is complementarily configured.

3. The motor of claim 2, wherein a distal end of the rotation shaft is formed with a coupling lug protrusively formed in a predetermined shape, and a surface corresponding to the coupling lug of the sun gear is formed with a coupling groove having a shape corresponding to the predetermined shape of the coupling lug and having a depth corresponding to a length of the coupling lug.

4. The motor of claim 3, wherein a distal end of the rotation shaft is formed with a coupling lug protrusively formed in a shape of "+", and a surface corresponding to the coupling lug of the sun gear having a shape corresponding to the predetermined "+" shape of the coupling lug and having a depth corresponding to a length of the coupling lug.

5. The motor of claim 3, wherein a distal end of the rotation shaft is formed with a coupling lug protrusively formed in a polygonal shape, and a surface corresponding to the coupling lug of the sun gear is formed with a coupling groove having a shape corresponding to the polygonal shape of the coupling lug and having a depth corresponding to a length of the coupling lug.
